# EUROPEAN PATENT APPLICATION

(11) **EP 1 841 227 A1**
(43) Date of publication of application: **03.10.2007**
(21) Application number: 07101306.4
(22) Date of filing: 29.01.2007
(51) Int. Cl.: H04N 7/16

(54) **Confirming the validity of a certificate and displaying content information**

(30) Priority: 21.03.2006 KR 20060025735
(71) Applicant: Samsung Electronics Co., Ltd., Yeongtong-gu Suwon-city, Gyeonggi-do 442-742 (KR)
(72) Inventor: Kim, Kwang-hyuk, Seoul (KR); Koh, Kwang-hyun, Seoul (KR); Kim, Yang-soo, Seoul (KR); Park, Sung-jin, dong, Yeongtong-gu, Suwon-si, Gyeonggi-do (KR)
(74) Representative: Walaski, Jan Filip

(57) **Abstract**

A method and a device for confirming a validity period of a certificate and a method and a device for displaying content information are provided. A certification error and displaying of wrong time information caused by wrong system time information can be prevented, and certification time can be reduced, by setting a system time for processing content on the basis of time information received from a content provider, confirming a validity period of a certificate for approval to access the content, and displaying content information.

## Description

The present invention relates to confirming the validity of a certificate and displaying content information, particularly but not exclusively to setting a system time in a cable television system.

Terms used to describe exemplary embodiments of the present invention are defined in OpenCable Application Platform Specification (OCAP) 1.0 Profile (OC-SP-OCAP1.0-I16-050803). These terms are described below.

A head-end refers to a control center of a cable television system which transmits content and signals to a host.

An electronic program guide (EPG) is an application that displays television program information including a program name, a start time, and duration.

An unbound application is an application that is not associated with a broadcasting service.

An extended application information table (XAIT) is used for executing and managing unbound applications.

An exemplary embodiment of the present invention relates to a method and a device for checking a validity period of a certificate of content, and more particularly, to a method and a device for checking a validity period of a content certificate, which are capable of preventing a certification error and a display of wrong time information and reducing a certification time.

As digital cable broadcasters improve service quality by offering more channels and providing broadcasting services with high image quality for users and subscribers, people are becoming more interested in digital cable broadcasting services. Thus, the number of subscribers for digital cable broadcasting services is increasing.

Digital cable televisions (TVs) directly provide digital cable broadcasting services to subscribers through a cable network. Unlike the public broadcasting service, since the digital cable broadcasting service is provided only for subscribers, service information is required to be protected. Digital cable broadcasters use a certification process for service information protection.

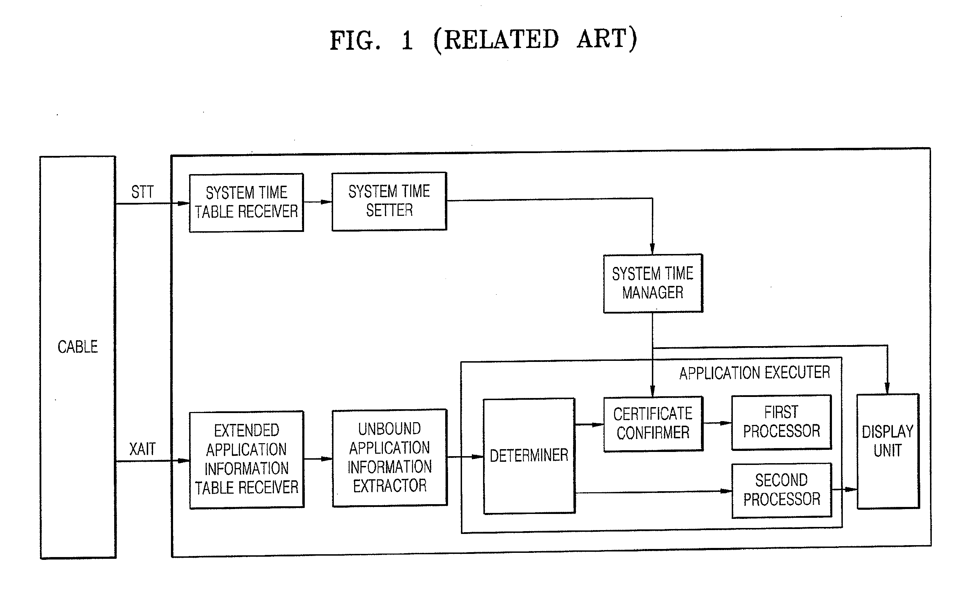

Figure 1 shows an existing application processing device used for a digital cable broadcasting service.

Referring to Figure 1, an existing application processing device receives an extended application information table (XAIT) from an out-of-band (OOB) channel of a cable and independently receives a system time table (STT) from the out-of-band channel. The application processing device receives the extended application information table and extracts unbound application information that is not associated with broadcasting channels. According to the extracted unbound application information, when the application is a signed application required to be certified, the application processing device checks the validity period of the certificate of the unbound application on the basis of system time information extracted by a system time manager. A typical example of a signed application whose certificate's validity period is required to be checked is a monitor application that is necessary for providing and controlling a service desired by a cable multiple system operator (MOS). In addition, when the unbound application information extracted from the extended application information table is not a signed application but an application such as an electronic program guide (EPG) including television (TV) information, the time information is extracted by the system time manager and is displayed on a screen after the application is executed.

As described above, the time information by the system time manager is needed to process the application. In the existing application processing device, the time information of the system time manager is set by extracting the time information from the system time table, which is received through the OOB channel independently of the extended application information table, and setting the time of the system time manager based on the extracted time information. However, the maximum duration of a period for receiving the aforementioned system time information is specified in digital video subcommittee (DVS)-234 (SERVICE INFORMATION DELIVERED OUT-OF-BAND FOR DIGITAL CABLE TELEVISION) as 60 seconds, whereas the maximum duration of a period for receiving an information table of the extended application such as the monitor application is specified in Chapter 11.2.2.3 OCAP 1.0 XAIT of OC-SP-OCAP1.0-I16-050803 (OpenCable Application Platform Specification OCAP 1.0 Profile) as 10 seconds. Accordingly, when the information table of the extended application such as the monitor application is received, and then, the system time table information is received, the application is certified, and the time information is displayed on the screen using the time information of the system before the system time manager is set using the system time table information, due to the difference in the times at which the extended information table and the system time table are received. When the application processing device is turned off in a digital cable broadcasting service, the time is not set to the current time but to the time of manufacture.

Accordingly, when the validity period of the certificate of the signed application is checked on the basis of the time information of the system, before the system time table information is set, the application is not executed, a certification error occurs, and therefore, subscribers have to repeat the certification process. In addition, in the case of an application including television (TV) information that uses time information, for example, in an electronic program guide, wrong time information is displayed until the system time information is set.

Exemplary embodiments of the present invention provide a device and a method capable of reducing a certification time and preventing a certification error and wrong time information display in a process of checking a validity period of a content certificate and a process of displaying content information. In addition, exemplary embodiments of the present invention also provide a computer-readable recording medium having embodied thereon a computer program for executing the aforementioned method.

The present invention is not limited to the aforementioned description, and it will be clearly understood by those of ordinary skill in the art based on the following description.

According to an aspect of the present invention, there is provided a method of checking a validity period of a certificate, the method including: setting system time for processing content on the basis of time information received from a content provider; and checking the validity period of the certificate for approval to access the content on the basis of the system time.

According to another aspect of the present invention, there is provided a computer-readable recording medium having embodied thereon a computer program for executing the method of checking the validity period of the certificate as set forth in the paragraph above.

According to another aspect of the present invention, there is provided a method of checking a validity period of a certificate, the method including: receiving time information from an out-of-band channel or an in-band channel among content transmission channels; setting system time for processing content on the basis of firstly received time information from the out-of-band channel or the in-band channel; and checking the validity period of the certificate for approval to access the content on the basis of the system time.

According to another aspect of the present invention, there is provided a computer-readable recording medium having embodied thereon a computer program for executing the method of checking the validity period of the certificate as set forth in the paragraph above.

According to another aspect of the present invention, there is provided a method of displaying content information, the method including: setting system time for processing content on the basis of time information received from a content provider; and displaying content information on the basis of the system time.

According to another aspect of the present invention, there is provided a computer-readable recording medium having embodied thereon a computer program for executing the method of displaying the content information as set forth in the paragraph above.

According to another aspect of the present invention, there is provided a method of displaying content information, the method including: (a) receiving time information from an out-of-band channel or an in-band channel among content transmission channels; (b) setting system time for processing content on the basis of firstly received time information from the out-of-band channel or the in-band channel; and (c) displaying the content information on the basis of the system time.

According to another aspect of the present invention, there is provided a computer-readable recording medium having embodied thereon a computer program for executing the method of displaying the content information above.

According to another aspect of the present invention, there is provided a device for checking a validity period of a certificate, the device including: a system time setter setting a system time for processing content on the basis of time information received from a content provider; a system time confirmer confirming the system time set by the system time setter; and a certificate verifier checking the validity period of the certificate for approval to access the content on the basis of the system time confirmed by the system time confirmer.

According to another aspect of the present invention, there is provided a device for checking a validity period of a certificate, the device including: a system time information receiver receiving time information from an out-of-band channel or an in-band channel among content transmission channels; a system time setter setting system time for processing content on the basis of firstly received time information from the out-of-band channel or the in-band channel; a system time confirmer confirming the system time set by the system time setter; and a certificate verifier checking the validity period of the certificate for approval to access the content on the basis of the system time confirmed by the system time confirmer.

According to another aspect of the present invention, there is provided a device for displaying content information, the device including: a system time setter setting system time for processing content on the basis of time information received from a content provider; a system time confirmer confirming the system time set by the system time setter; and a display unit displaying content information on the basis of the system time confirmed by the system time confirmer.

According to another aspect of the present invention, there is provided a device for displaying content information, the device including: a system time information receiver receiving time information from an out-of-band channel or an in-band channel among content transmission channels; a system time setter setting system time for processing content on the basis of firstly received time information from the out-of-band channel or the in-band channel; a system time confirmer confirming the system time set by the system time setter; and a display unit displaying content information on the basis of the system time confirmed by the system time confirmer.

Embodiments of the invention will now be described, by way of example, with reference to the accompanying drawings, in which:
Figure 1 shows an existing application processing device used in a digital cable broadcasting service;
Figure 2 is a flowchart of an application processing method used in a digital cable broadcasting service, according to an exemplary embodiment of the present invention;
Figure 3 shows an application processing device used in a digital cable broadcasting service, according to another exemplary embodiment of the present invention; and
Figure 4 shows a structure of a system time table receiver shown in Figure 3 according to another exemplary embodiment of the present invention.

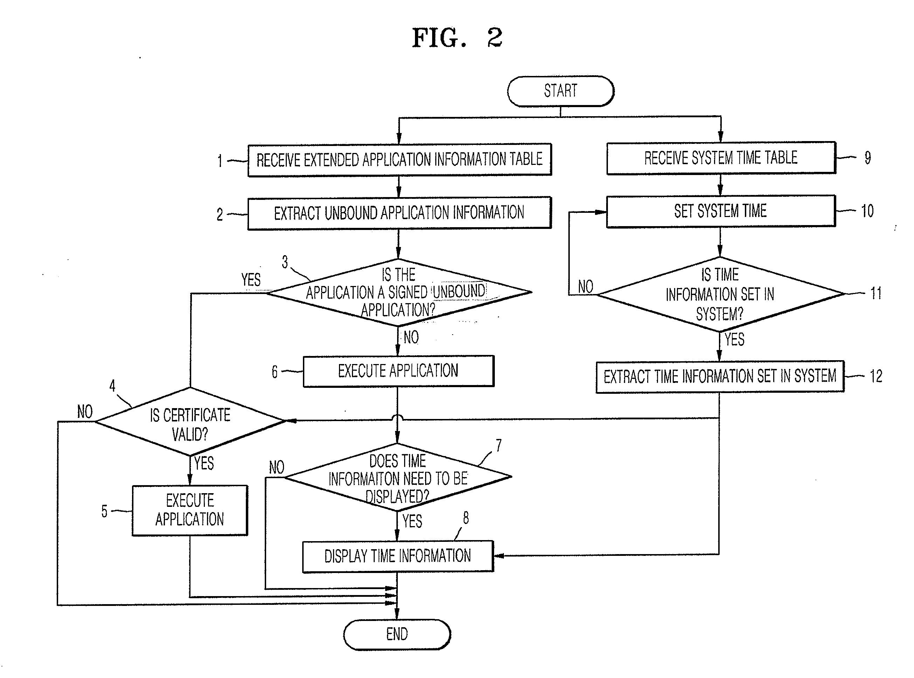

Figure 2 is a flowchart of an application processing method used in a digital cable broadcasting service according to an exemplary embodiment of the present invention.

Referring to Figure 2, in the application processing method according to the exemplary embodiment of present invention, operations 1 to 8 are sequentially performed, and operations 9 to 11 are sequentially performed. However, operations 1 and 9 are performed independently.

In operation 1, a host receives an extended application information table from an out-of-band channel of a cable, and the method proceeds to operation 2.

In operation 2, the host extracts unbound application information from the extended application information table received in operation 1. An unbound application is not associated with broadcasting channels and is always executed.
The unbound application is typically a monitor application.

Accordingly, an application that is executed independently of broadcasting channels is searched for and extracted, and the method proceeds to operation 3.

In operation 3, the host determines whether the unbound application extracted in operation 2 is a signed unbound application required to be certified through time information of a system before the application is executed. When the unbound application is a signed unbound application required to be certified, the method proceeds to operation 4. Otherwise, the method proceeds to operation 6.

In operation 4, the host determines whether a validity period of a certificate of the application that is determined to be a signed application in operation 3 has not expired.

Since it is determined on the basis of the time information set in the host system whether the validity period of the certificate has expired, a time setting process has to precede the determination of the expiration of the validity period of the certificate. The time setting process of the host will be described through operation 9, which is performed independently of operation 1.

In operation 9, the host receives a system time table from the out-of-band channel and an in-band channel including the time information. Since the out-of-band channel includes the time information, additional confirmation is unnecessary. In the case of the in-band channel, when it is confirmed that the digital channel includes the time information, the host receives the system time information table. The method proceeds to operation 10.

In operation 10, the host sets the system time to the time information extracted from the received system time table.

In operation 11, the host confirms that the system time of the system is set using the time information extracted from the system time table by comparing the time information of the system time table with the time information of the system and determining whether the time information of the system time table is the same as the that of the system. When it is confirmed that the system is set to the time of the system time table, the method proceeds to operation 12, and otherwise, the method returns to operation 10.

In operation 12, the host extracts and stores the system time information in operation 11. Time setting for the host is performed in operations 9 to 12.

Referring to operation 4 again, the host determines whether the validity period of the certificate of the application determined as the signed application in operation 3 has expired, on the basis of the time information with which the system is set. In the above process, the system time information extracted and stored in operation 12 is used as the time information of the system. When the validity period of the certificate of the application has not expired, the method proceeds to operation 5, otherwise, the application is not executed and the method is terminated.

In operation 5, the host executes the application when it is determined that the validity period of the certificate of the application has not expired in operation 4. When the application determined to be valid is the monitor application, the monitor application is executed.

In operation 6, the host executes the application determined not to be the signed unbound application in operation 3 and terminates the method.

In operation 7, when the time information display is essential to execution of the application, the host determines that the time information display is necessary, and otherwise, the host determines that the time information display is unnecessary.

When the time information display is necessary, the method proceeds to operation 8, and otherwise, the method is terminated.

In operation 8, the host receives the time information of the system stored in operation 12, displays the time information on a screen displaying the application in which the time information display is necessary, and terminates the method. In the case of an application such as an electronic program guide (EPG), program information based on the time information is displayed on the screen.

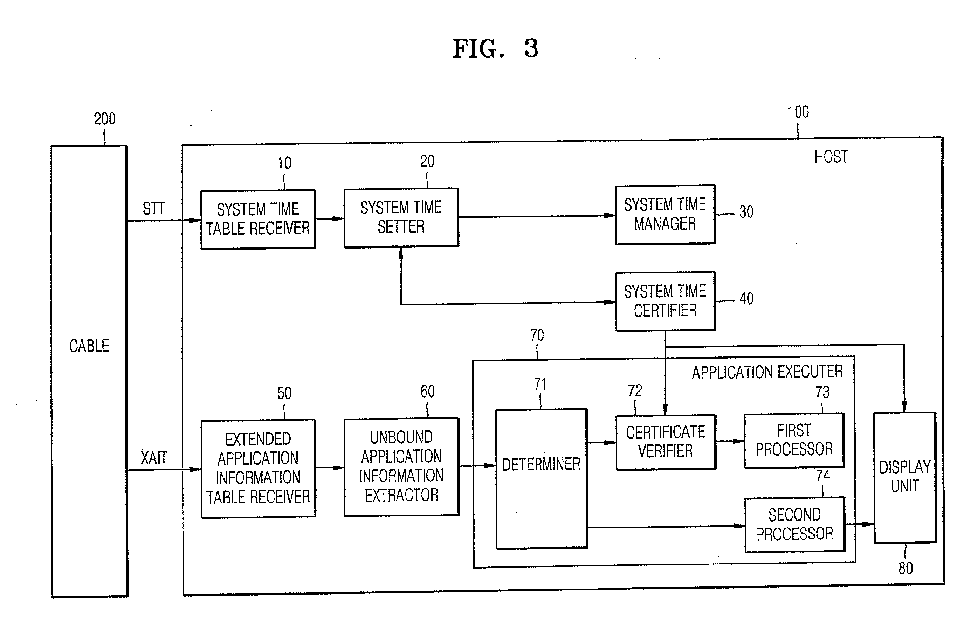

Figure 3 shows an application processing device used in a digital cable broadcasting service according to another exemplary embodiment of the present invention.

Referring to Figure 3, an application processing device used in a digital cable broadcasting service according to an exemplary embodiment of the present invention includes a system time table receiver 10, a system time setter 20, a system time manager 30, a system time certifier 40, an extended application information table receiver 50, an unbound application information extractor 60, an application executer 70, and a display unit 80.

The system time table receiver 10 receives a system time table from an out-of-band channel and an in-band channel of a cable 200.

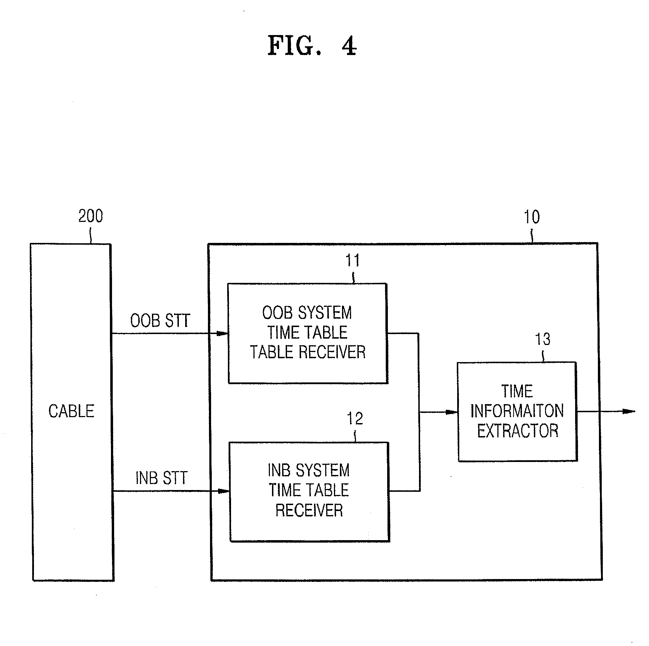

Figure 4 shows a structure of a system time table receiver shown in Figure 3 according to another exemplary embodiment of the present invention.

Referring to Figure 4, the system time table receiver 10 includes an out-of-band system time table receiver 11, an in-band system time table receiver 12, and a time information extractor 13.

The out-of-band system time table receiver 11 receives system time table information from the out-of-band channel and the in-band channel of the cable 200.

The in-band system time table receiver 12 receives the system time table from a digital channel including time information among in-band channels of the cable. Since only the digital channel including time information is used among the in-band channels in which the in-band time table receiver 12 receives the system time table, the system time table receiver 10 receives the system time table only from the in-band channel including the time information. A typical example of the in-band channel including the time information is a terrestrial public channel such as KBS.

The time information extractor 13 extracts the time information from a firstly received system time table among system time tables received by the out-of-band system time table receiver 11 or the in-band system time table receiver 12.

Referring to Figure 3 again, the system time setter 20 transmits the time information extracted from the system time table receiver 10 to the system time manager 30 and sets up the system time using the time information of the system time table.

The system time manager 30 stores the time information that is set on the basis of the time information transmitted from the system time setter 20 and manages the stored time information as the system time.

The system time certifier 40 stores the time information in the system, after comparing the time information of the system time setter 20 with the time information of the system time manager 30 and determining whether the time information of the system time manager 30 is set to be the same as that of the system time setter 20. Then, the confirmation of the time to which the system is set may be delayed until the system time table receiver 10 receives the system time information and, i.e., the confirmation may be performed after the system time information is received. In addition, the time information with which the system is set may be stored in a separate storage unit. Since system time information stored in a separate storage unit is stored in the system even when the application processing device for digital cable broadcasting service is turned off, the time information stored in the separate storage unit can be used without resetting the time of the system when the application processing device for digital cable broadcasting service is turned on again within a short time. When the system time manager 30 is not set with the time information of the system time table, the time of the system time manager 30 is reset by the system time setter 20.

The extended application information table receiver 50 receives the extended application information table from the out-of-band channel of the cable 200.

The unbound application information extractor 60 extracts and stores only unbound application information that is not influenced by the channel from the extended application information table received by the extended application information table receiver 50.

The application executer 70 includes a determiner 71, a certificate verifier 72, a first processor 73, and a second processor 74.

The determiner 71 of the application executer 70 determines whether the unbound application information is a signed application required to be certified before execution. An unbound application such as the monitor application required to be certified before execution is determined to be a signed application, and an application not required to be certified is determined not to be the signed application. The unbound application determined to be a signed application is transmitted to the certificate verifier 72, and the application determined not to be a signed application is transmitted to the second processor 74.

The certificate verifier 72 of the application executer 70 confirms the validity period of the certificate on the basis of the time information stored in the system time certifier in order to certify the transmitted signed application. When the time information is stored in the separate storage unit, the time information stored in the separate storage unit before the system manager is set to the system time may be usable. When it is determined that the validity period of the certificate has not expired on the basis of the time information extracted from the system time manager 30, the certificate is determined to be valid, and otherwise, the certificate is determined to be invalid. When the certificate of the application is determined to be valid, the application is transmitted to the first processor 73 of the application executer 70.

The second processor 74 of the application executer 70 executes an application that is not a signed application and transmits to display unit 80 an application in which the time information is required to be displayed on a screen.

The first processor 73 of the application executer 70 executes a signed application whose certificate is determined to be valid by the certificate verifier 72.

The display unit 80 receives the application in which the time information is required to be displayed on the screen through the second processor 74 of the application executer 70, extracts the time information stored in the system time certifier 40, and displays the extracted time information on the screen. Then, when the time information is stored in the separate storage unit, the time information stored in the separate storage unit before the system manager is set to the system time, can be used.

According to exemplary embodiments of the present invention, certification errors and wrong time information display caused by not setting the system time information before the unbound application is executed due to a difference in the times at which the extended information table and the system time table are received can be prevented by checking the validity period of the content certificate after setting the system time information, when it is determined whether or not the validity period of the certificate of the content that needs the time information has expired. In addition, the time taken to set the system time information can be reduced by receiving the system time table from the in-band channel including time information in addition to an out-of-band channel.

## Claims

1. A method of confirming a validity period of a certificate, the method comprising:
(a) setting a system time for processing content on the basis of time information received from a content provider; and
(b) checking the validity period of the certificate for approval to access the content on the basis of the system time.

2. The method of claim 1,
wherein (b) further comprises confirming that the system time is set, and
wherein when it is confirmed that the system time is set, the validity period of the certificate for the approval to access the content is checked on the basis of the system time.

3. The method of claim 1 or 2, further comprising extracting information on the validity period of the certificate for the approval to access the content from information on an application that uses the content,
wherein (b) comprises checking the extracted information on the validity period of the certificate for the approval to access the content on the basis of the system time.

4. The method of claim 2, wherein in (b), the operation of confirming that the system time is set is delayed until the time information is received from the content provider in (a).

5. A method according to any preceding claim, further comprising:
receiving time information from one of an out-of-band channel and an in-band channel among content transmission channels, wherein,
setting a system time for processing content is performed on the basis of the time information that is received first out of time information received from the out-of-band channel and time information received from the in-band channel.

6. The method of claim 5, comprising delaying confirming that the system time is set until after the time information is received from one of the out-of-band channel and the in-band channel.

7. A method of displaying content information, the method comprising:
(a) setting a system time for processing content on the basis of time information received from a content provider; and
(b) displaying content information on the basis of the system time.

8. The method of claim 7,
wherein (b) further comprises confirming that the system time is set, and
wherein when it is confirmed that the system time is set, the content information is displayed on the basis of the system time.

9. The method of claim 7 or 8, further comprising extracting the content information from information on an application that uses the content,
wherein in (b), the extracted content information is displayed on the basis of the system time.

10. The method of claim 8, wherein in (b), the operation of confirming that the system time is set is delayed until the time information is received from the content provider in (a).

11. A method according to any one of claims 7 to 10, further comprising:
receiving time information from one of an out-of-band channel and an in-band channel among content transmission channels, wherein,
setting a system time for processing content is performed on the basis of the time information that is received first out of the time information that is received from the out-of-band channel and the time information that is received from the in-band channel.

12. The method of claim 11, further comprising extracting information on the validity period of the certificate for the approval to access the content, from information on an application using the content,
wherein in (b), the extracted information on the validity period of the certificate is displayed on the basis of the system time.

13. The method of claim 11, comprising delaying confirming that the system time is set until after the time information is received from one of the out-of-band channel and the in-band channel.

14. A computer program which, when executed, causes the method of any one of the preceding claims to be performed.

15. A device for confirming a validity period of a certificate, the device comprising:
means for setting a system time for processing content on the basis of time information received from a content provider;
means for confirming the system time set by the system time setting means; and
a certificate verifier for checking the validity period of the certificate for approval to access the content on the basis of the system time confirmed by the system time confirming means.

16. The device of claim 15, wherein the system time confirming means is arranged to delay confirming that the system time is set until the time information is received from the content provider.

17. The device of claim 15 or 16, further comprising a separate storage unit arranged to store the system time set by the system time setting means,
wherein the certificate verifier is arranged to check the validity period of the certificate for the approval to access the content on the basis of the system time stored in the storage unit.

18. A device according to claim 15, 16 or 17, further comprising:
means for receiving time information from one of an out-of-band channel and an in-band channel among content transmission channels, wherein,
the system time setting means is arranged to set the system time for processing content on the basis of the time information that is received first out of time information received from the out-of-band channel and time information received from the in-band channel.

19. A device for displaying content information, the device comprising:
means for setting a system time for processing content on the basis of time information received from a content provider;
means for confirming the system time set by the system time setting means; and
a display unit for displaying content information on the basis of the system time confirmed by the system time confirming means.

20. The device of claim 19, wherein the system time confirming means is arranged to delay confirming that the system time is set until the time information is received from the content provider.

21. A device according to claim 19 or 20, further comprising:
means for receiving time information from one of an out-of-band channel and an in-band channel among content transmission channels, wherein,
the system time setting means is arranged to set the system time for processing content on the basis of the time information that is received first out of time information received from the out-of-band channel and time information received from the in-band channel.
